# EUROPEAN PATENT SPECIFICATION

(11) **EP 0 822 921 B1**
(45) Date of publication and mention of the grant of the patent: **08.10.2003**
(21) Application number: 96912975.8
(22) Date of filing: 19.04.1996
(51) Int. Cl.: C02F 1/50, A01N 25/04

(54) **TREATMENT FOR INHIBITING MICROBIAL ADHESION ON SURFACES**
BEARBEITUNG ZUR HEMMUNG DER MIKROBISCHEN ADHÄSION AN OBERFLÄCHE
TRAITEMENT DESTINE A INHIBER L'ADHESION MICROBIENNE SUR DES SURFACES

(30) Priority: 28.04.1995 US 430569
(43) Date of publication of application: 11.02.1998
(73) Proprietor: BetzDearborn Inc, Trevose, PA 19053-6783 (US)
(72) Inventor: WRIGHT, J., Barry, Jacksonville, FL 32257 (US); MICHALOPOULOS, Daniel, L., Jacksonville, FL 32224 (US); JOHNSON, M., Christine, St. Augustine, FL 32084 (US)
(74) Representative: W.P. THOMPSON & CO.
(86) International application number: PCT/US96/05526
(87) International publication number: WO 96/033951

(56) References cited:
- EP-A- 0 302 701
- US-A- 5 380 756
- US-A- 5 439 681
- DATABASE WPI Section Ch, Week 8127 Derwent Publications Ltd., London, GB; Class A95, AN 81-48872D XP002012979 & JP,A,56 057 888 (LION CORP) , 20 May 1981
- DATABASE WPI Section Ch, Week 9502 Derwent Publications Ltd., London, GB; Class A97, AN 95-009516 XP002013011 & JP,A,06 293 607 (TOKUYAMA SODA KK) , 21 October 1994
- DATABASE WPI Section Ch, Week 9502 Derwent Publications Ltd., London, GB; Class A97, AN 95-011711 XP002013012 & JP,A,06 298 603 (TAKEDA CHEM IND LTD) , 25 October 1994

## Description

### TECHNICAL FIELD

The present invention deals with a chemical addition to an aqueous system which inhibits the microbial colonization of surfaces in contact with the system. The treatment substantially prevents the adhesion of microbes to the surfaces while preserving the viability of the microbes in the system, allowing for the discharge of the microbes from the system.

### BACKGROUND ART

Bacterial attachment to surfaces in virtually any non-sterile aquatic environment is a well-established phenomenon. Industrial efforts to prevent colonization or to clean fouled surfaces amount to costly expenditures in a number of industrial sectors. Often, such expenditures are made for cleaning programs that include the use of surfactants. Surfactants are regularly employed in water treatment programs as agents believed to play a role in the removal of organic masses from surfaces, in the enhancement of biocide efficacy or in the assistance in the water miscibility of various biocidal agents. Surfactants are also regularly used in the agrichemical business, particularly to enhance the action of herbicides. This is accomplished by using the surfactants to alter the surface behavior of the applied droplets, maximizing their interaction with the leaf surface.

There are numerous examples of surfactants which are able to inhibit the colonization of surfaces by inhibiting the overall growth of the organisms in the target environment. Most surfactants, regardless of class, show some inhibition of surface colonization when used at concentrations high enough to impede bacterial growth. In the water treatment industry, the most well known surfactants which impart a measure of colonization resistance to submerged surfaces are the cationic quaternary amine surfactants, which also function as biocides. However, even the relatively mild nonionic surfactants can exhibit toxic effects upon microbes, e.g., bacteria or fungi; the concentration of nonionic surfactants necessary to mediate toxicity is typically substantially higher than for cationic surfactants, however.

Examples of nontoxic control of surface colonization typically require the use of high concentrations of surfactants not feasible in water treatment industries where thousands or millions of gallons of water would be treated.

The present invention relates to the use of surfactants which act by inhibiting microbial adhesion to surfaces in contact with an aqueous system. The materials of the present invention have been previously used in areas such as fiber wetting in the textile industry. These materials function to inhibit adhesion at concentrations below which toxicity has been observed for the tested organisms.

### BRIEF DESCRIPTION OF DRAWINGS

Figure 1 illustrates the inhibition of P. aeruginosa colonization of stainless steel by dinonylsulfosuccinate.
Figure 2 illustrates the dynamic surface tension reduction through the addition of dinonylsulfosuccinate.
Figure 3 illustrates surface colonization at an alkaline fine paper mill. Biomass is in nanograms (ng)/cm².

### DISCLOSURE OF THE INVENTION

According to the present invention there is provided a method of inhibiting the microbial colonization of surfaces in contact with an aqueous system by substantially preventing the adhesion of microbes to the surfaces while preserving the viability of the microbes in the system, allowing for the discharge of the microbes from the system, which comprises adding to the system an alkylsulfosuccinate surfactant and a polyoxyethylene-polyoxypropylene block copolymer surfactant, alkylsulfosuccinate and the polyoxyethylene-polypropropylene block copolymer being added collectively to the aqueous system in an amount of from 1 to 150 parts based upon 1 million parts of the aqueous system. The present invention prevents the adhesion of microbes to the surfaces while preserving the viability of the microbes in the process stream of the system, allowing for their discharge from the system.

The present invention substantially inhibits the extent of bacterial colonization of surfaces without exhibiting toxicity toward the target population, thereby allowing for the discharge of the microbes from the system.
It is expected that the treatment of the present invention will also yield a waste stream that has markedly reduced mammalian toxicity, and is thus more environmentally sensitive than current protocols that rely upon toxic biocides.

Anionic sulfosuccinate surfactants with dialkyl chain lengths of from about 7-10 carbons (i.e., each chain containing 7-10 carbons) will be the most effective for purposes of the present invention. It is theorized that best efficacy will be achieved when the alkyl chain is minimally branched, with any occurring branching occurring at the distal end of the alkyl chain.

The method of the present invention demonstrates the ability of a surfactant to inhibit colonization of surfaces at concentrations below those that cause a reduction in the number of viable microbes, e.g., bacteria or fungi. This "environmentally friendly" control methodology prevents bacterial attachment without reducing the number of viable microbes. Furthermore, the class of chemicals involved in this substantially non-toxic treatment of the present invention are biodegradable (alkylsulfosuccinates).

In order to demonstrate efficacy of the present invention, a method was developed which allowed for the screening of surfactant ability to inhibit the initial colonization steps. This method involved the colonization of commercially available stainless steel discs by bacteria in the presence/absence of surfactants. The number of bacteria on a set of discs was then determined by standard methods.

The bacterial species Pseudomonas aeruginosa, (P. aeruginosa) was chosen as the organism for these studies because this species has frequently been demonstrated to be among the primary colonizers of submerged surfaces. These organisms are also nearly ubiquitous in natural aquatic environments and could, therefore, be expected to be found in the process water streams in a variety of industries; the strain used was a paper mill isolate.

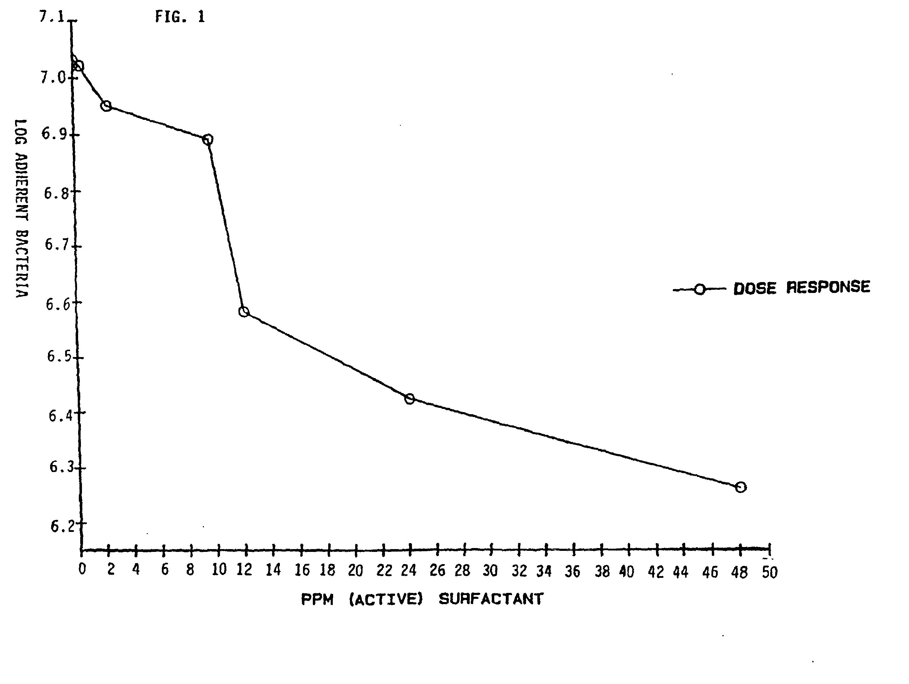

Products seen to be effective at minimizing initial colonization were further examined for a dose response relationship to colonization inhibition. Figure 1 shows the results of the dose-response assay, using the preferred product of the present invention, a dinonylsulfosuccinate, over a three hour colonization period.

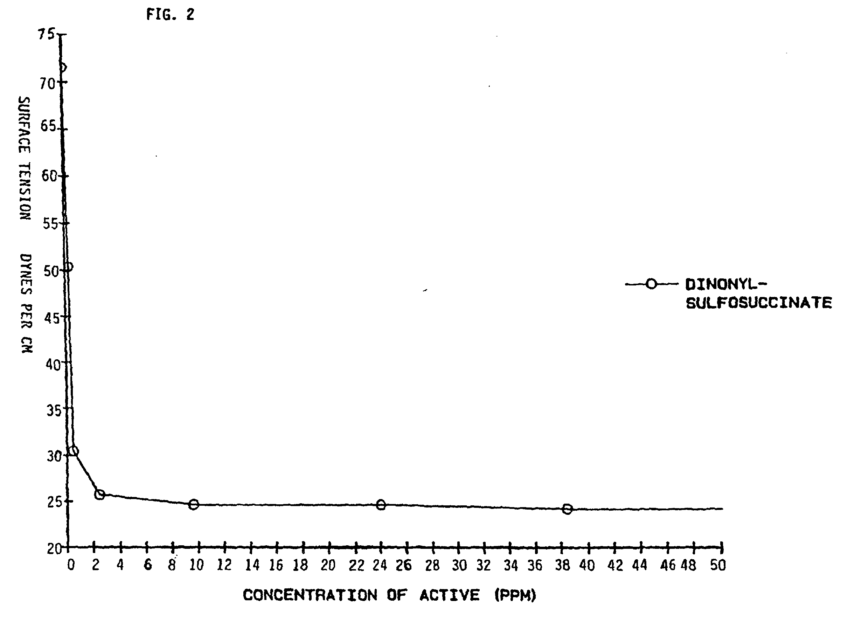

As surfactants are, by definition and in practice, compounds which reduce the surface tension of the media to which they are added, a correlation between surface tension reduction and inhibition of colonization was examined. As mentioned above, the stainless steel surface experiments were used to generate dose-response curves reflecting the extent of colonization inhibition using a variety of surfactants. Data were also generated relative to the decrease in surface tension of the media caused by the presence of the surfactants at concentrations used in the dose-response curves. These data are presented in Figure 2. This figure demonstrates substantial decrease in surface tension mediated by as little as 0.5 ppm of the active product.

The preferred material of the present invention, while showing an immediate and sharp drop in surface tension at 0.5 ppm active ingredient, did not show a correspondingly sharp inhibition of colonization (Figure 1). In addition, while the critical micelle concentration was about 2.8 ppm of the preferred material, the most pronounced drop in surface colonization was seen at concentrations between from about 10 to 12 ppm. There was, however a continued, though more modest, increase in the impedance of bacterial colonization, corresponding to increasing concentrations of the surfactant in the media.

Experiments were also carried out in order to examine whether the bacteria present in the stainless steel disc test system altered the surface tension by virtue of the potential production of biosurfactants. There was not any evidence of reduction in the surface tension of the media either as a direct result of the addition of the bacteria to the test system, or as a result of the growth of the bacteria during the course of the three hour experiment. This confirmed that the results of the preceding surface tension experiments were dependent upon the addition of the chemical surfactant.

In order to determine the effect of the addition of the surfactants on the interfacial tension between the media and the steel surfaces, contact angle experiments were conducted with the surfactant added to the media and applied to the surface of the stainless steel discs.

Experiments were carried out with the preferred compound of the present invention at a variety of concentrations, and the results indicated that a minimum contact angle (and maximum surface "wettability") was obtained with approximately 2.5 ppm of the surfactant. Therefore, these results lend further support to the contention that the observed decrease in surface colonization, in the presence of the preferred material of the present invention, is not strictly related to a physical interaction of the surfactant with either the media or the steel surfaces.

Following a demonstration of the ability of selected surfactants to impede colonization of stainless steel in a relatively static test system, the surfactants were examined for similar efficacy over longer periods of time. This was accomplished through the use of "long term" colonization assays in order to determine the efficacy of these products over a period of approximately 24 or more hours. Colonization recirculation loops with removable coupons were employed for this study. Cultures of bacteria, supplemented with the preferred surfactant of the present invention, were recirculated through the colonization devices and the extent of colonization of the steel surfaces was compared, over time, to a concurrently run control device; the overall systems operated under continuous culture conditions.

The time of action of the preferred surfactant of the present invention was greatly modified relative to that observed in the static tests. In these experiments, there was virtually no difference between the colonization of the two devices over the initial phase of colonization (first six hours). By about eight hours of colonization, there was a small difference in the extent of colonization. This difference was magnified by 30 hours where there was a noticeable 0.77 log₁₀-order smaller population on the surfaces taken from the device being treated with the preferred surfactant. It is also important to note that the reduction in colonization is not mediated by a significantly toxic effect on the bacteria (see Table I).

**TABLE I**

| | *Planktonic P. aeruginosa* | | *Planktonic P. pickettii* | |
|---|---|---|---|---|
| Surfactant Concentration (ppm) | LOG CFU/mL | Change Relative to Control | LOG CFU/mL | Change Relative to Control |
| 0 | 6.34 | ----- | 6.25 | ----- |
| 5 | 6.30 | -0.04 | 6.24 | -0.01 |
| 12 | 6.30 | -0.04 | 6.16 | -0.09 |
| 24 | 6.43 | 0.09 | 6.09 | -0.16 |
| 36 | 6.42 | 0.08 | 6.07 | -0.18 |
| 48 | 6.51 | 0.17 | 6.13 | -0.12 |

Note that the present invention may also be effective on surfaces other than stainless steel, e.g., acrylic, ceramic or metal surfaces. Furthermore, other aqueous systems, such as metal working and oil and gas systems will also benefit from the present invention.

### INDUSTRIAL APPLICABILITY

A preferred embodiment of the present invention (i.e., the dinonylsulfosuccinate sodium salt) was tested in a side-stream device at an alkaline fine paper mill. The test was conducted using a side-stream device that allowed for the concurrent sampling of both control and treated surfaces and associated bulk-phase water. The treatment was continually fed into the test system in order to maintain a constant concentration of 48 ppm (active) in the white water. Surface colonization was monitored by chemically determining the amount of biomass on a given surface.

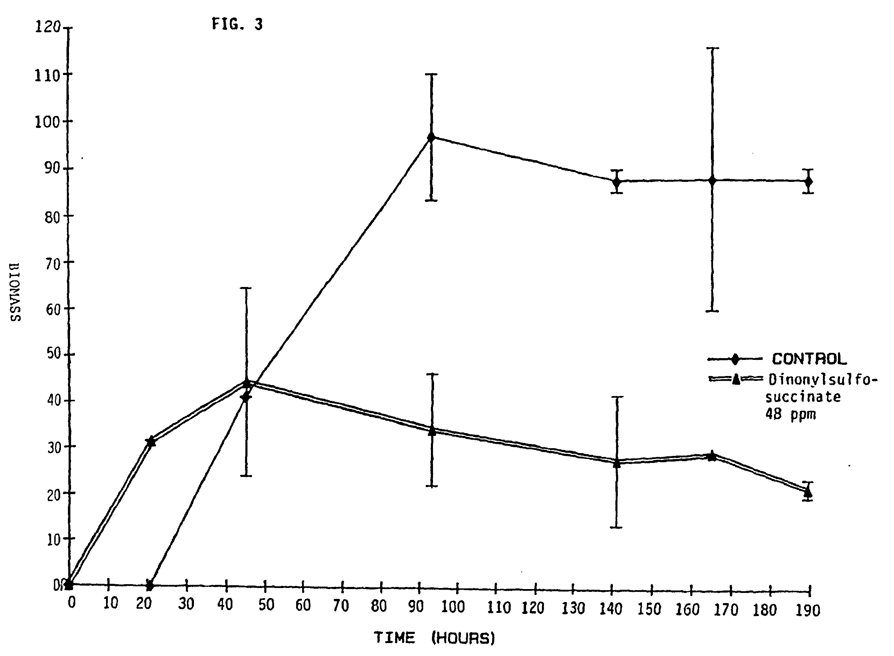

As shown in Figure 3, there was a significant difference in the amount of biomass and overall deposit formation on the control vs. test devices. The surfaces exposed to treated water were essentially free of any detectable deposit, while surfaces exposed to the control water had very evident build-up.

The same protocol was repeated, using 12 ppm of the preferred product, and similar results were obtained. Epifluorescent examination of the surfaces (treated and control) demonstrated that the control surfaces had a significantly greater degree of bacterial colonization than the treated surfaces. However, 12 ppm of the preferred product did, of course, allow more bacterial colonization to occur than the 48 ppm treatment regimen. A visual and tactile inspection of the test system demonstrated that 12 ppm of the preferred product continued to demonstrate efficacy at keeping the surfaces visually free of deposit. It is expected that amounts of the treatment of the present invention as low as from about 1-5 ppm may be effective, depending upon the characteristics of the treated system, e.g., bacterial load.

Additional results of colonization inhibition experiments carried out with various molecules encompassed by the present invention are found in Table II, below.

**TABLE II**

| Surfactant | Concentration mg/L | Colonization % of Control |
|---|---|---|
| DNSS | 0 | 100 |
| | 5 | 100 |
| | 15 | 28.6 |
| | 25 | 26.4 |
| | 50 | 10.2 |
| DOSS | 0 | 100 |
| | 5 | 100 |
| | 15 | 61.1 |
| | 25 | 15.1 |
| | 50 | 13.5 |
| DDSS | 0 | 100 |
| | 5 | 100 |
| | 15 | 71.3 |
| | 25 | 33.7 |
| | 50 | 30 |
| DNSS - Dinonylsulfosuccinate DOSS - Dioctylsulfosuccinate DDSS - Didecylsulfosuccinate | | |

As noted above, various alkylsulfosuccinate surfactants show efficacy in the control of microbial colonization. Depending on the particular alkylsulfosuccinate surfactant chosen for treatment, the concentration of material needed to achieve efficacy may vary.

Several block copolymer surfactants as exemplified by the Pluronic® and Tetronic® classes of surfactants, available from BASF, were tested in combination with the preferred anionic sulfosuccinate of the present invention, a dinonylsulfosuccinate. Many of the block copolymers, although exhibiting little or no colonization inhibition at concentrations less than 100 mg/L when used alone, were seen to increase the efficacy of dinonylsulfosuccinate. The majority of these combinations resulted in control of surface colonization.

The materials that demonstrate the best enhancement of efficacy are the Pluronic surfactants that have between 10 and 50% polyoxyethylene, with molecular weights in the range of approximately 1,800 to 4,000. The following table demonstrates the efficacy of the present invention. The values reflect the amount of nucleic acid recovered from the adherent bacteria on discs exposed to the indicated treatment relative to adherent bacteria recovered from untreated discs. The preferred EO/PO block copolymer of the present invention, tested in the following Tables, is a Pluronic L-101 surfactant with a molecular weight of about 3800 and with 10% polyoxyethylene (Polymer A).

**TABLE III**

| **Colonization Inhibition Efficacy as a Function of the Addition of EO-PO Block Copolymer and/or Dinonylsulfosuccinate** | | |
|---|---|---|
| Dinonylsulfosuccinate (mg/L) | Polymer A | Nucleic Acid Recovered as Percentage of Control |
| | (mg/L) | (%) |
| 2.0 | 0 | 100 |
| 5.0 | 0 | 100 |
| 12.0 | 0 | 55.1 |
| 48.0 | 0 | 26.4 |
| 0.5 | 1.0 | 100 |
| 2.0 | 4.0 | 36.1 |
| 5.0 | 10.0 | 13.3 |
| 12.0 | 24.0 | 12.7 |
| 48.0 | 96.0 | 15.4 |

The above results indicate that the block copolymer is able to substantially enhance the efficacy of low concentrations of dinonylsulfosuccinate. The block copolymer, alone, failed to demonstrate any colonization inhibition at concentrations up to 200 mg/L. It is expected that treatment levels of the combination of surfactants of from 1 ppm to 150 ppm would be effective, depending on the characteristics of the treated system.

An additional result of mixing the two surfactants is that they are each minimally water soluble. Mixing the surfactants together allows for a greater proportion of active ingredients to be mixed into a given volume of water. A preferred range of mixtures of the surfactants is from a 4:1 to 1:10 ratio of dialkylsulfosuccinate:block copolymer, with a 1:2 ratio being particularly preferred. These mixtures are generally water soluble (or dispersible) in any desired proportion.

The treatment of the present invention, i.e., of enhancing colonization inhibition efficacy by mixing block copolymers with other surfactants is not limited to dinonylsulfosuccinate. Other members of the alkylsulfosuccinate family are also given much more significant colonization inhibition efficacy when mixed with an EO-PO polymer. Sulfosuccinates with alkyl chain lengths of from about 5 to 13 carbons demonstrate enhanced efficacy when mixed with block copolymers. Table IV demonstrates the enhancement observed when mixing the preferred block copolymer of the present invention (Polymer A) with two additional types of alkylsulfosuccinates, a diethylhexylsulfosuccinate and a diamylsulfosuccinate. The experimental system is similar to that described in Table III, above.

**TABLE IV**

| **Colonization Inhibition Efficacy as a Function of Addition of EO-PO Block Copolymer and/or Diethylhexyl- or Diamyl-Sulfosuccinate** | | |
|---|---|---|
| Alkylsulfosuccinate Concentration (mg/L) | Polymer A Concentration (mg/L) | Nucleic Acid Recovered as % of Control |
| Diamyl-2 | 0 | 95 |
| Diamyl-5 | 0 | 100 |
| Diamyl-10 | 0 | 100 |
| Diamyl-2 | 2.7 | 100 |
| Diamyl-5 | 6.7 | 82.4 |
| Diamyl-10 | 13.3 | 57.1 |
| Diethylhexyl-2 | 0 | 100 |
| Diethylhexyl-5 | 0 | 100 |
| Diethylhexyl-10 | 0 | 80 |
| Diethylhexyl-2 | 3.1 | 71.2 |
| Diethylhexyl-5 | 7.7 | 22.1 |
| Diethylhexyl-10 | 15.4 | 13.7 |

Table V demonstrates the type of efficacy enhancement observed with amphoteric surfactants, specifically, amphoteric surfactants derived from dipropionic acid. One of the surfactants tested was a sodium C₁₂₋₁₅ alkoxypropyl iminodipropionate. This material was mixed with the preferred block copolymer surfactants (Polymer A) of the present invention.

**TABLE V**

| **Colonization Inhibition Efficacy as a Function of Addition of EO-PO Block Copolymer and/or Sodium C**_{**12-15**} **Alkoxypropyl Iminodipropionate** | | |
|---|---|---|
| Alkoxypropyl Iminodipropionate Concentration (mg/L) | Polymer A Concentration (mg/L) | Nucleic Acid Recovered as % of Control |
| 5 | 0 | 100 |
| 15 | 0 | 100 |
| 25 | 0 | 100 |
| 35 | 0 | 100 |
| 50 | 0 | 100 |
| 5 | 14.3 | 100 |
| 15 | 42.9 | 17.1 |
| 25 | 71.5 | 19.8 |
| 35 | 100.1 | 15.3 |
| 50 | 143.0 | 6.5 |

## Claims

1. A method of inhibiting the microbial colonization of surfaces in contact with an aqueous system by substantially preventing the adhesion of microbes to the surfaces while preserving the viability of the microbes in the system, allowing for the discharge of the microbes from the system, which comprises adding to the system an alkylsulfosuccinate surfactant and a polyoxyethylene-polyoxypropylene block copolymer surfactant, alkylsulfosuccinate and the polyoxyethylene-polypropropylene block copolymer being added collectively to the aqueous system in an amount of from 1 to 150 parts based upon 1 million parts of the aqueous system.

2. A method as claimed in claim 1, wherein the weight ratio of alkylsulfosuccinate : polyoxyethylene-polyoxypropylene block copolymer is from 4 : 1 to 1 : 10, respectively.

3. A method as claimed in any one of the preceding claims, wherein the alkylsulfosuccinate surfactant is a dialkylsulfosuccinate.

4. A method as claimed in claim 3, wherein the dialkylsulfosuccinate is a dinonylsulfosuccinate.

5. A method as claimed in any one of the preceding claims, wherein the aqueous system comprises a cooling water system, a pulping or papermaking system, a metal working system, or an oil and gas system.

## Patentansprüche

1. Verfahren zum Inhibieren der mikrobiellen Besiedlung von Oberflächen in Kontakt mit einem wässrigen System durch weitgehende Verhinderung der Anhaftung von Mikroben auf den Oberflächen, während die Lebensfähigkeit der Mikroben in dem System erhalten bleibt, zur Ermöglichung des Entfernens der Mikroben aus dem System, welches das Zufügen zu dem System eines Alkylsulfosuccinat-Tensids und eines Polyoxyethylen-Polyoxypropylen-Blockcopolymer-Tensids umfasst, wobei dem wässrigen System Alkylsulfosuccinat und das Polyoxyethylen-Polypropropylen-Blockcopolymer in einer Menge von 1 bis 150 Teil(en) bezogen auf 1 Million Teile des wässrigen Systems kollektiv zugefügt werden.

2. Verfahren nach Anspruch 1, worin das Gewichtsverhältnis von Alkylsulfosuccinat : Polyoxyethylen-Polyoxypropylen-Blockcopolymer von 4 : 1 bis 1 : 10 beträgt.

3. Verfahren nach einem der vorangehenden Ansprüche, worin das Alkylsulfosuccinat-Tensid ein Dialkylsulfosuccinat ist.

4. Verfahren nach Anspruch 3, worin das Dialkylsulfosuccinat ein Dinonylsulfosuccinat ist.

5. Verfahren nach einem der vorangehenden Ansprüche, worin das wässrige System ein Kühlwassersystem, ein Zellstoff- oder Papierherstellungssystem, ein Metallbearbeitungssystem oder ein Öl- und Gassystem ist.

## Revendications

1. Méthode d'inhibition de la colonisation microbienne de surfaces en contact avec un système aqueux en empêchant sensiblement l'adhésion de microbes aux surfaces, tout en préservant la viabilité des microbes dans le système, permettant la décharge des microbes depuis le système, comprenant l'addition au système d'un agent tensioactif à l'alkylsulfosuccinate et d'un agent tensioactif au copolymère bloc de polyoxyéthylène-polyoxypropylène, l'alkylsulfosuccinate et le copolymère bloc de polyoxyéthylène-polypropropylène étant ajoutés collectivement au système aqueux en une quantité allant de 1 à 150 parties par million de parties du système aqueux.

2. Méthode selon la revendication 1, dans laquelle le rapport pondéral de l'alkylsulfosuccinate:copolymère bloc de polyoxyéthylène-polyoxypropylène va de 4:1 à 1:10, respectivement.

3. Méthode selon l'une quelconque des revendications précédentes, dans laquelle l'agent tensioactif à l'alkylsulfosuccinate est un dialkylsulfosuccinate.

4. Méthode selon la revendication 3, dans laquelle le dialkylsulfosuccinate est un dinonylsulfosuccinate.

5. Méthode selon l'une quelconque des revendications précédentes, dans laquelle le système aqueux comprend un système de refroidissement par eau, un système de fabrication de papier ou de réduction en pâte, un système de travail des métaux, ou un système de pétrole et de gaz.
